# EUROPEAN PATENT APPLICATION

(11) **EP 4 428 885 A1**
(43) Date of publication of application: **11.09.2024**
(21) Application number: 22889964.7
(22) Date of filing: 02.11.2022
(51) Int. Cl.: H01G 9/08, H01G 9/10, H01G 11/70, H01G 11/74, H01G 11/80, H01G 11/82, H01G 11/84

(54) **POWER STORAGE DEVICE AND METHOD FOR MANUFACTURING SAME**

(30) Priority: 02.11.2021 JP 2021179186
(71) Applicant: Nippon Chemi-Con Corporation, Tokyo 141-8605 (JP)
(72) Inventor: YASUDA, Ryoichi, Tokyo 141-8605 (JP); TSUMEDA, Satoru, Tokyo 141-8605 (JP); KUROKI, Takashi, Tokyo 141-8605 (JP)
(74) Representative: Mewburn Ellis LLP
(86) International application number: PCT/JP2022/040948
(87) International publication number: WO 2023/080144

(57) **Abstract**

The power storage device includes: a case (exterior case 4) including a storage portion (6); a power storage element (8) in which an electrode tab (anode tab 10, cathode tab 12) is formed on a wound end surface and which is stored in the storage portion; a sealing member (18) which is disposed in the storage portion and whose peripheral surface is crimped to an inner wall surface of the case by swaging (swaging portion 30) from an outer peripheral side of the case to seal an opening portion of the storage portion; a support plate (current collecting plate 14) which is in contact with and supports a surface of the sealing member, the surface facing a bottom side of the storage portion; and a support member (folder 20) which is disposed on a surface of plane surfaces of the sealing member, the surface of the plane surfaces facing an opening portion side of the storage portion, and presses and supports the sealing member by engagement with an opening end (36) of the case swaged (vertical swaging portion 32) toward the bottom side of the storage portion. As a result, the sealed state of the case by the sealing member is stabilized against an increase in the pressure in the case.

## Description

### Technical Field

The technology of the present disclosure relates to a sealing technology for an opening portion of a case that houses a power storage element.

### Background Art

In a power storage device such as an electric double layer capacitor or an electrolytic capacitor, a sealing member is disposed in an opening portion of a case containing a power storage element and an electrolytic solution, and the sealing member is swaged together with the case for sealing. Accordingly, even when gas is generated by a chemical reaction of the electrolyte solution during driving, the power storage device prevents leakage of the gas or the electrolyte solution between the storage portion and the outside air, mixing of foreign matter into the storage portion, or the like.

In addition, power storage devices are often used in, for example, automobiles and the like, but an influence of vibration from the outside is increasing. Therefore, for a power storage device, there is a component for supporting the power storage device and a part thereof is disposed and fixed in an opening portion of a case, for the purpose of, for example, improving installation strength for a board or other equipment to be mounted, absorbing vibration, and the like.

Regarding a component installed in such a power storage device, there is a component including an annular baseplate and a mounting foot protruding from an inner side of the annular baseplate, in which the annular baseplate is disposed on a sealing member disposed in a case and swaged by bending a case opening portion (for example, Patent Literature 1) .

### Citation List

### Patent Literature

Patent Literature 1: JP S38-12051 Y1

### Summary of Invention

### Technical Problem

Incidentally, in the power storage device, gas is generated by a chemical reaction of the electrolytic solution during driving, and the gas fills the inside of the case, which may increase internal pressure of the case. In this case, in the inside of the case, for example, the gas tends to easily flow to the opening portion side, thereby applying pressure to the sealing member that seals the opening portion. Then, the sealing member may be partially deformed or displaced by being pressed toward the opening portion as the internal pressure increases. In the power storage device, connection between the power storage element and an external terminal is required to maintain sufficient strength and an electrical connection state is required in order to obtain necessary electric power, but there is a possibility that deterioration of the connection state or disconnection of the connection state may occur due to deformation or displacement of the sealing member. When such a change in the sealed state of the opening portion by the sealing member occurs, there is a problem that power cannot be supplied by the power storage element, or power supply efficiency decreases due to an increase in resistance due to deterioration in the connection state.

Regarding such a problem, the problem of the present disclosure is not disclosed or suggested, and the problem cannot be solved by the configuration disclosed in Patent Literature 1.

The inventors of the technology of the present disclosure have found that in a power storage device in which a power storage element connected to an external terminal is stored in a case and an opening portion thereof is sealed by a sealing member, deformation and displacement of the sealing member can be suppressed when an internal pressure of the case is increased, by sandwiching both surfaces of the sealing member between a current collecting plate and a support member pressed by swaging of an opening end of the case in the storage portion.

Therefore, in view of the above problems and the above knowledge, an object of the technology of the present disclosure is to stabilize a sealed state of a case by a sealing member against an increase in pressure in the case.

### Solution to Problem

In order to achieve the above object, one aspect of a power storage device of the present disclosure includes: a case including a storage portion; a power storage element in which an electrode tab is formed on a wound end surface and which is stored in the storage portion; a sealing member which is disposed in the storage portion and whose peripheral surface is crimped to an inner wall surface of the case by swaging from an outer peripheral side of the case to seal an opening portion of the storage portion; a support plate which is in contact with and supports a surface of the sealing member, the surface facing a bottom side of the storage portion; and a support member which is disposed on a surface of plane surfaces of the sealing member, the surface of the plane surfaces facing an opening portion side of the storage portion, and presses and supports the sealing member by engagement with an opening end of the case swaged toward the bottom side of the storage portion.

In the power storage device, in the sealing member, at least a part of an outer edge side of the surface on the bottom side and the surface on the opening portion side of the case is held between the support plate and the support member.

In the above power storage device, the support plate is a current collecting plate having one surface in contact with the electrode tab, and another surface in contact with the sealing member, a part of the current collecting plate being provided with a first external terminal, and the first external terminal protruding from the current collecting plate toward the opening portion side penetrates a through hole formed in a part of a sealing surface of the sealing member, and the sealing member holds the current collecting plate through the first external terminal by receiving stress due to swaging from the outer peripheral side of the case.

In the power storage device, the support member includes a second external terminal which is electrically connected to the power storage element through the case in contact with the electrode tab of an anode or a cathode disposed on the bottom side of the storage portion.

In the power storage device, a plurality of electrode tabs including the electrode tab includes an anode tab formed on one wound end surface of the power storage element and a cathode tab formed on another wound end surface of the power storage element, and one of the anode tab and the cathode tab is welded to the support plate, and the other is fixedly connected to a bottom of the storage portion by welding.

In order to achieve the above object, one aspect of a method for manufacturing a power storage device according to the present disclosure includes: bringing one surface of a current collecting plate into contact with an electrode tab formed on a wound end surface of a power storage element to electrically connect a first external terminal integrated with the current collecting plate to the power storage element, and bringing another surface of the current collecting plate into contact with one surface of a sealing member disposed in a storage portion of a case in which the power storage element is stored; disposing a support member on a surface of plane surfaces of the sealing member, the surface of the plane surfaces facing an opening portion side of the storage portion; crimping a peripheral surface of the sealing member and an inner wall surface of the case by swaging from an outer peripheral side of the case to seal the opening portion; and swaging an opening end of the case toward the current collecting plate, and pressing and supporting the sealing member by engagement with the opening end.

The method for manufacturing the power storage device further includes pressing the sealing member stored in the storage portion with a predetermined force to dispose the sealing member at a setting position of the storage portion, in which the swaging processing from the outer peripheral side of the case and the swaging processing for the opening end are performed with the sealing member pressed.

The method for manufacturing the power storage device includes electrically connecting the power storage element and a second external terminal formed on the support member through the case and the electrode tab of an anode or a cathode disposed on a bottom side of the storage portion.

### Advantageous Effects of Invention

According to the present disclosure, any one of the following effects can be obtained.
(1) When an internal pressure of the case increases, deformation of the sealing member and displacement of the sealing member toward the opening portion of the case can be suppressed.
(2) By suppressing displacement of the current collecting plate due to deformation or displacement of the sealing member in the case, a connection state between the power storage element and the external terminal can be stabilized.
(3) An internal resistance of the power storage element due to the deterioration of the connection state between the power storage element and the external terminal can be suppressed.
(4) By holding both surfaces of the sealing member between the current collecting plate and the support member, and pressing the sealing member by the swaging processing, it is possible to prevent the case internal pressure from acting on a part of the current collecting plate or the support member inside the case.

### Brief Description of Drawings

Fig. 1 is a diagram illustrating an internal configuration example of a power storage device according to a first embodiment.
Fig. 2 is a diagram illustrating an appearance of the power storage device.
Fig. 3 is an exploded diagram illustrating a configuration example of the power storage device.
Fig. 4 is a diagram illustrating an example of a state of stress applied to a sealing member.
Fig. 5 is a diagram illustrating a configuration example of a folder.
Fig. 6 is a diagram illustrating a configuration example of a power storage element.
Fig. 7 is a diagram illustrating a formation example of an electrode tab.
Fig. 8 is a diagram illustrating a configuration example of the power storage element on which a current collecting plate is installed.
Fig. 9 is a diagram illustrating an internal configuration example of a power storage device according to a

### second embodiment.

Fig. 10 is a diagram illustrating a modification of the power storage device.

### Mode(s) for Carrying out the Invention

### [First Embodiment]

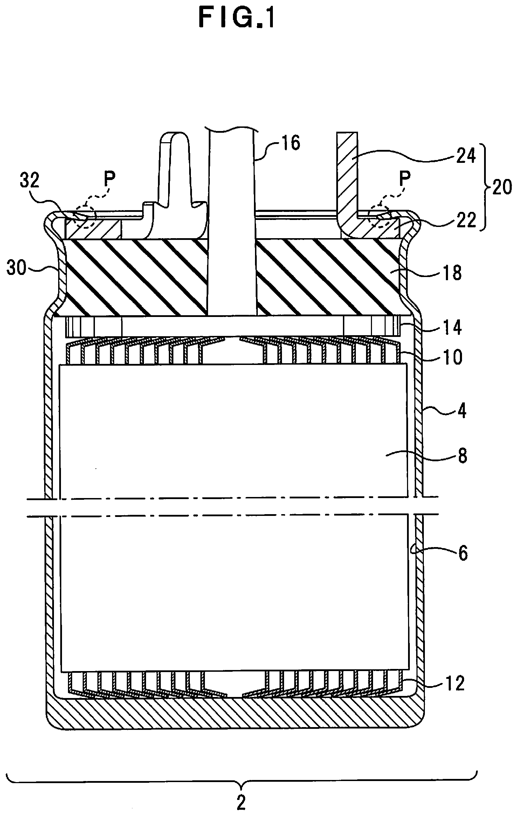

Fig. 1 illustrates a configuration example of a power storage device according to a first embodiment. The configuration illustrated in Fig. 1 is an example, and the technology of the present disclosure is not limited to such a configuration.

For example, as shown in Fig. 1, a power storage device 2 is an example of an electric double layer capacitor, an electrolytic capacitor, and other power storage devices, and a power storage element 8, an electrolytic solution (not shown), and the like are stored in a storage portion 6 formed in an exterior case 4. The power storage device 2 is formed in a columnar shape by winding, for example, an electrode foil or the like, and is a device having a so-called axial structure using the power storage element 8 including an anode tab 10 on one end surface and a cathode tab 12 on another end surface. Then, in the power storage device 2, for example, the power storage element 8 is disposed such that the anode tab 10 is directed in the opening portion direction of the case 4, and a current collecting plate 14 is connected to a part or the whole of the tip of the anode tab 10. In addition, the power storage device 2 includes an external terminal 16, a sealing member 18, and a folder 20 at least in the storage portion 6.

The current collecting plate 14 is a current collector that electrically connects the wound electrode foil and the external terminal 16 to each other, and conducts charges stored in the electrode foil on the anode side to the external terminal 16, and is made of, for example, a conductive metal material. The power storage device 2 uses a current collecting plate 14 which is joined to the external terminal 16 formed of a separate member or is integrally molded with the external terminal 16 using the same material.

Furthermore, the current collecting plate 14 is an example of a support plate of the present disclosure that is in contact with and supports the sealing member 18 disposed on the opening portion side in the storage portion 6, and is, for example, disposed such that the same surface as the surface on which external terminal 16 is formed is in contact with one surface of the sealing member 18.

The external terminal 16 is an example of the first external terminal of the present disclosure, and functions as, for example, an anode terminal. The external terminal 16 has a diameter smaller than an outer shape or a width of the current collecting plate 14, and is formed at or near a center portion of a disk surface of the current collecting plate 14. Accordingly, the current collecting plate 14 and the external terminal 16 are disposed in an inverted "T" shape when stored in the exterior case 4.

In the power storage device 2, the sealing member 18 for sealing the opening portion is disposed in the storage portion 6. The sealing member 18 is an example of means for preventing a foreign matter from entering into the storage portion 6 and preventing leakage of an electrolyte solution in storage portion 6, and is made of, for example, insulating rubber, another rubber material, or a resin material.

The sealing member 18 allows the tip side of the external terminal 16 to be disposed outside the exterior case 4 by inserting, toward the opening portion, the external terminal 16 protruding from the current collecting plate 14. At this time, the sealing member 18 is in a crimped state on a part of a peripheral surface of the external terminal 16, and provides a shield between the external terminal 16 and the sealing member 18.

The folder 20 is an example of a support member of the present disclosure that is disposed on the opening portion side in the storage portion 6 and supports the sealing member 18, and includes, for example, a support surface portion 22 that is disposed on the plane of the sealing member 18 and supports the sealing member 18, and a protrusion 24 that is formed in a state orthogonal to or near orthogonal to the support surface portion 22 and protrudes outward from the opening portion.

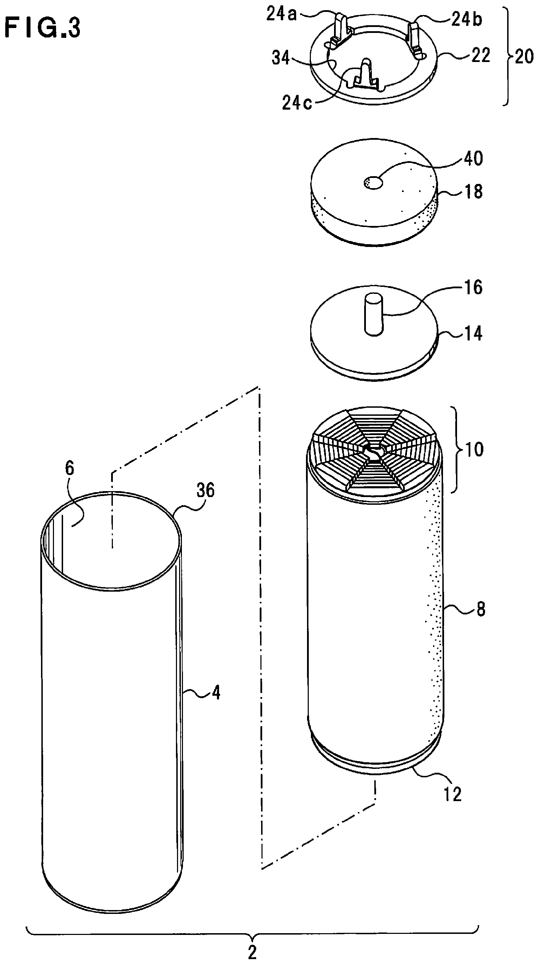

The support surface portion 22 is formed on, for example, a plane facing the opening portion side of the exterior case 4 and has an area in contact with a predetermined width on the outer edge side. The support surface portion 22 is in surface contact with at least the sealing member 18, and is formed to have a width that can be in contact with a tip or a portion close to the tip of a vertical swaging portion 32 obtained by swaging an opening end 36 (Fig. 3) of the exterior case 4 in an internal direction of the storage portion 6, and is disposed at a position in contact with the vertical swaging portion 32.

The protrusion 24 is an example of a second external terminal of the present disclosure, and is used as a terminal component of the power storage device 2 by being inserted into a substrate (not illustrated) or the like. For example, one or more protrusions 24 are formed in the folder 20.

In the power storage device 2, for example, the cathode tab 12 of the power storage element 8 is connected to a bottom of the exterior case 4 directly or via a current collector (not illustrated). For example, a part or the whole of the exterior case 4 is formed of a conductive metal material, and the opening end 36 where the vertical swaging portion 32 is formed and the support surface portion 22 are in contact with each other at a contact point P. At this time, the opening end 36 may be in strong contact with the support surface portion 22 by vertical swaging, for example, and the opening end 36 may be bitten into the support surface portion 22. As a result, the protrusion 24 is brought into conduction with the cathode tab 12 of the power storage element 8 through the support surface portion 22, the contact point P, and the exterior case 4.

The protrusion 24 may be used as a support terminal for stably holding the power storage device 2 mounted on a substrate or the like. For a plurality of protrusions 24, for example, some thereof may be used as external terminals on the cathode side, and the others may be used as support terminals.

In addition, in the power storage device 2, a swaging portion 30 is formed in the exterior case 4 depending on an arrangement position of the sealing member 18 in the storage portion 6. The swaging portion 30 is an example of means for crimping an inner wall surface of the exterior case 4 and an outer peripheral surface of the sealing member 18 together by a predetermined pressure in a direction from the outside of the exterior case 4 to a central axis. In this swaging processing, for example, a pressing force is set based on rigidity of the exterior case 4 and the sealing member 18, an assumed depth of the swaging portion 30, and the like. The swaging portion 30 is, for example, formed by pressing a pressing jig (not illustrated) against a peripheral surface of the exterior case 4 and rotating either or both of the jig and the power storage device 2.

### <External configuration of power storage device 2>

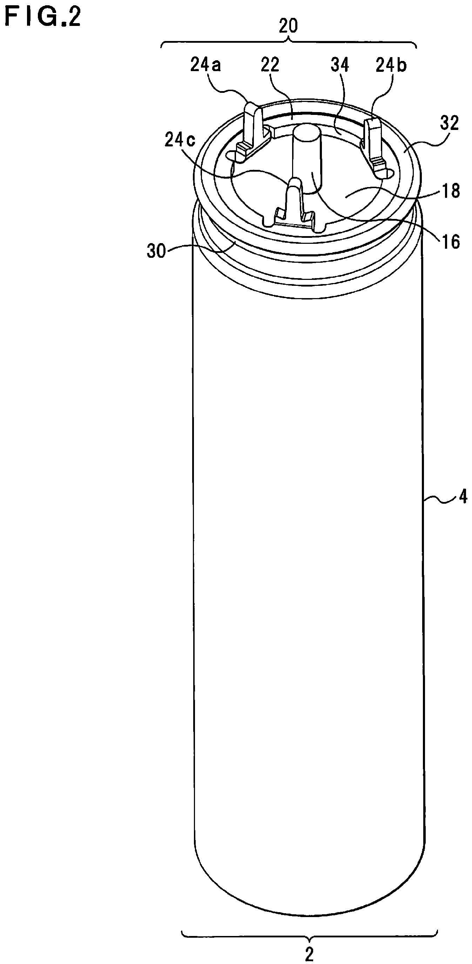

For example, as shown in Fig. 2, in the power storage device 2, the external terminal 16 is disposed at the center of the opening portion of the exterior case 4, and the plurality of protrusions 24a, 24b, 24c is disposed around the external terminal 16. Furthermore, in the power storage device 2, for example, the vertical swaging portion 32 is formed on the outer periphery, a part of the support surface portion 22 of the folder 20 is exposed in an opening portion inside the vertical swaging portion 32, and a part of the sealing member 18 is exposed to the center side.

For example, the swaging portion 30 is formed on a side surface of the power storage device 2 along the periphery of the exterior case 4 depending on the arrangement position of the sealing member 18.

Note that, on the peripheral surface of the exterior case 4, for example, a swaging portion for crimping the power storage element 8 and the inner wall surface of the exterior case 4 together may be formed as well as the swaging portion 30 aligned with the position of the sealing member 18 may be formed. In that case, the power storage element 8 may be covered with, for example, an insulating material with respect to the whole or at least the swaging position of the wound electrode foil to prevent conduction between a part of the peripheral surface of the power storage element 8 and the inner wall surface of the exterior case 4.

### <Internal configuration of power storage device 2 and manufacturing process thereof>

Fig. 3 illustrates an internal configuration example of the power storage device. The configuration of the power storage device and the processing of forming the power storage device illustrated in Fig. 3 are merely examples, and the present invention is not limited to such contents.

For example, as shown in Fig. 3, in the power storage device 2, the power storage element 8, the current collecting plate 14, the sealing member 18, the folder 20 and the like are stored in the storage portion 6 of the exterior case 4 from the opening portion. All or a part of the power storage element 8, the current collecting plate 14, the sealing member 18, and the folder 20 may be brought into contact with or connected to each other before being stored in the case 4, and then may be stored integrally with each other, or may be brought into contact with or connected to each other in a storage portion 6.

Then, in the power storage device 2, the opening portion of the storage portion 6 is sealed by disposing the sealing member 18 and the support surface portion 22 of the folder 20 on one surface of the sealing member 18 in the storage portion 6.

For example, the exterior case 4 has the opening portion in which one end side of the storage portion 6 is released to the outside, and is formed in a bottomed cylindrical shape in which a cross section in a direction parallel to the opening portion is a circular shape or a polygonal shape. In the exterior case 4, for example, a hard material including metal such as aluminum, an aluminum alloy in which manganese or magnesium is added, or the like is used as a material having corrosion resistance against contact with the electrolyte solution filled inside and outside air, and conductivity, and having flexibility that it can be deformed by swaging a part from the outside.

For example, the power storage element 8 in which an electrode foil is wound in a columnar shape is stored in the exterior case 4 with the anode tab 10 facing the opening portion side and the cathode tab 12 facing a bottom side, and the current collecting plate 14, the sealing member 18, and the folder 20 are disposed on or above the anode tab 10. For example, at least the anode tab 10 and the current collecting plate 14 may be connected to each other before the power storage element 8 is stored in the storage portion 6.

In addition, when the cathode tab 12 is inserted into the storage portion 6 of the exterior case 4, the cathode tab 12 is brought into contact with the bottom, and then welding processing is performed from the outside of the exterior case 4 to a bottom surface portion, whereby the cathode tab 12 and the bottom are electrically connected to each other.

The sealing member 18 is made of, for example, insulating rubber, another rubber material, or a resin material. The sealing member 18 has, for example, an outer diameter equivalent to the inner diameter of the storage portion 6, and has an outer shape formed in a circular shape, an elliptical shape, or a polygonal shape similar to the cross-sectional shape of the storage portion 6. As a result, sealing performance of the sealing member 18 with respect to the inner wall surface of the storage portion 6 is enhanced, and sealing performance of the opening portion can be enhanced. Furthermore, the sealing member 18 includes an insertion hole 40 through which the external terminal 16 is inserted, for example, at a central portion of the sealing surface or in the vicinity thereof. The opening diameter of the insertion hole 40 is, for example, equivalent to that of the cross-sectional shape of the external terminal 16, and is formed to be the same as or smaller than the outer diameter of the cross-sectional shape of the external terminal 16. This improves the contact between the sealing member 18 and the external terminal 16.

Then, in the power storage device 2, after the electrolyte solution (not shown) is put in the inside of the storage portion 6 together with the power storage element 8, the current collecting plate 14, the sealing member 18 and the folder 20, the swaging portion 30 is formed on the side surface portion on the opening portion side, and a part of the opening end 36 of the exterior case 4 is curled in an inside direction of the storage portion 6 and is pressed, whereby the vertical swaging portion 32 (Fig. 1) is formed for sealing. The swaging portion 30 and the vertical swaging portion 32 may be performed, for example, either first or simultaneously.

In addition, for example, the swaging processing is executed in a state where the sealing member 18 is pressed with a predetermined force against the upper surface side of the sealing member 18 stored in the storage portion 6 and disposed at a predetermined position in the storage portion 6. The position at pressing is set by using dimensional information such as, for example, a length in the storage portion 6, a length of at least the power storage element 8 to be stored, heights of the anode tab 10 and the cathode tab 12, a thickness of the current collecting plate 14, and a thickness of the sealing member 18. Then, when the swaging portion 30 and the vertical swaging portion 32 are formed with respect to the exterior case 4, the pressing of the sealing member 18 is released. For the pressing processing on the sealing member 18, for example, a dedicated jig capable of contacting only the upper surface of the sealing member 18 without contacting the external terminal 16 or the folder 20 is used.

### <Sealing state of opening portion of storage portion 6>

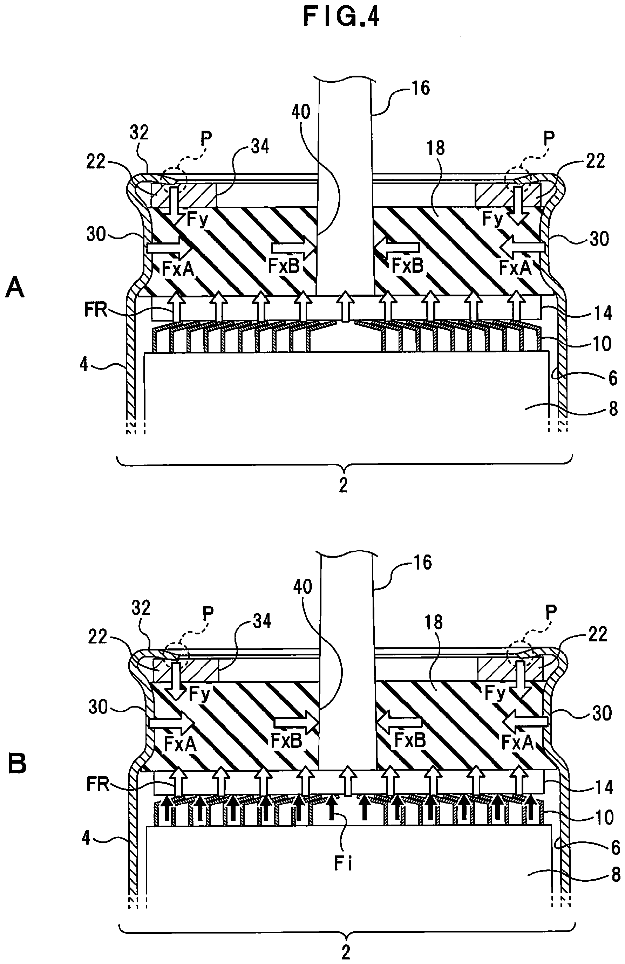

Fig. 4 illustrates an example of a state of stress applied to a sealing member.

In the storage portion 6 of the power storage device 2 in which the opening portion is sealed, for example, as illustrated in A of Fig. 4, the sealing member 18 is pressed in a predetermined direction by the swaging portion 30 and the vertical swaging portion 32, and the peripheral surface is fixed and supported by the current collecting plate 14 and the support surface portion 22 of the folder 20. Furthermore, in the power storage device 2, the swaging portion 30 and the vertical swaging portion 32 are formed in the state that the sealing member 18 is pressed toward the inside of the storage portion 6, and then the pressing on the sealing member 18 is released. That is, the sealing member 18 is slightly displaced toward the power storage element 8 together with the current collecting plate 14 by, for example, pressing. This brings the power storage element 8, the anode tab 10, or the cathode tab 12 in a compressed state by the displacement of the current collecting plate 14 and the sealing member 18. That is, the sealing member 18 is brought into close contact with the inner wall surface of the exterior case 4 by, for example, the swaging portion 30, thereby receiving a predetermined pressing force FxA in the direction to the central axis of the power storage device 2. In addition, when the sealing member 18 receives the pressing force FxA, the stress acts in the center direction through a body portion and is transmitted to the external terminal 16 through the inner wall surface of the insertion hole 40. That is, the sealing member 18 generates a pressing force FxB proportional to the pressing force FxA on the inner wall surface of the insertion hole 40, and holds the peripheral surface of the external terminal 16 by supporting the pressing force FxB. As described above, since the external terminal 16 is formed integrally with the current collecting plate 14, the pressing force FxB acts as a holding force for disposing the current collecting plate 14 at a predetermined position.

In addition, a pressing force Fy by the vertical swaging portion 32 acts on the sealing member 18 from the opening portion toward the bottom. The pressing force Fy acts on a planar portion of the sealing member 18 from the support surface portion 22 of the folder 20 through the contact point P.

In this manner, predetermined pressing forces FxA and Fy are applied to the sealing member 18 in the direction to the central axis and the inside direction of the storage portion 6 by the assembly of the power storage device 2.

Furthermore, the sealing member 18 is swaged in a state of being displaced by pressing and fixed at a displaced position, thereby receiving the repulsive force FR from the power storage element 8, the anode tab 10, or the cathode tab 12 in a compressed state.

For example, as illustrated in B of Fig. 4, when an internal pressure in the storage portion 6 is increased by driving of the power storage device 2, a pressure Fi in the opening portion direction acts on the sealing member 18 in the storage portion 6 directly or through the current collecting plate 14. For example, the pressure Fi is not necessarily generated in a uniform state in the same direction in the entire storage portion 6. That is, the current collecting plate 14 and the sealing member 18 may receive the pressure Fi which is partially large with respect to the planar portion. In addition, the pressure Fi may act in a direction inclined at a predetermined angle with respect to the opening direction.

In the storage portion 6 on which the pressure Fi acts, in the power storage device 2, the peripheral surface of the sealing member 18 is brought into contact with the inner wall surface of the exterior case 4, and the sealing surface is brought into contact with the folder 20 and the current collecting plate 14. Furthermore, the pressing force FxA acts on the sealing member 18 from the peripheral surface in the direction to the central axis by the swaging portion 30, the pressing force Fy acts on the sealing member 18 in the inside direction of the storage portion 6 by the vertical swaging portion 32, and the repulsive force FR acts on the sealing member 18 from the power storage element 8 or the anode tab 10 side. In addition, the current collecting plate 14 is fixed and held on the bottom surface side of the sealing member 18 by the pressing force FxB acting on the external terminal 16 from the inner wall surface of the insertion hole 40. As a result, the outer peripheral surface and both planar portions of the sealing member 18 are fixed, so that the outer shape can be maintained against the uneven pressure Fi in the storage portion 6, and displacement in the opening portion direction can be prevented.

Furthermore, in the power storage device 2, by suppressing deformation and displacement of the sealing member 18, it is possible to, for example, prevent the pressure Fi in the storage portion 6 from acting on the contact point P between the support surface portion 22 of the folder 20 and the vertical swaging portion 32.

### <Configuration example of folder 20>

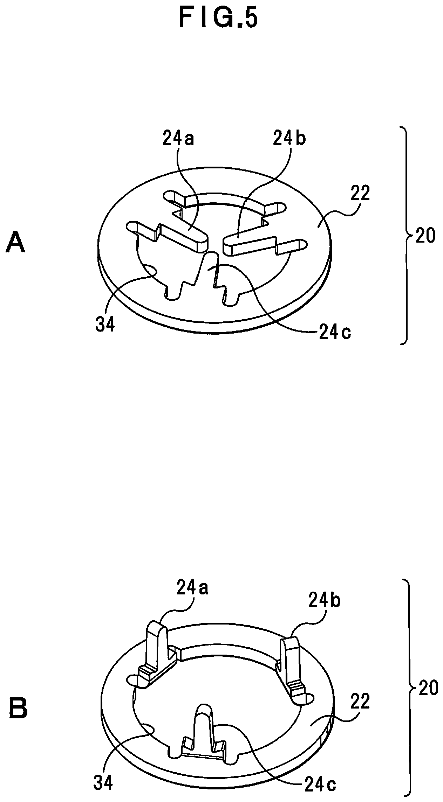

Fig. 5 illustrates an external configuration example of the folder.

The folder 20 is made of a metal having conductivity and easy to shape, such as iron or aluminum. For example, as illustrated in A of Fig. 5, the folder 20 includes the support surface portion 22 having a circular outer shape and formed with a predetermined width, and the protrusions 24a, 24b, and 24c formed with a predetermined width together with a space portion 34 inside a plane of the support surface portion 22 and protruding toward the center of the circular shape.

The space portion 34 is formed to achieve insulation between the support surface portion 22 electrically connected to cathode tab 12 and the external terminal 16 protruding toward the opening portion, and to reduce weight of the folder 20. Since an opening area of the space portion 34 is inversely proportional to the width of the support surface portion 22, the opening area affects the support property of a plane of the sealing member 18. That is, by reducing the opening area of the space portion 34, the support surface portion 22 becomes wide, and the plane on the opening side of the sealing member 18 can be widely supported. Accordingly, it is possible to increase the support strength of the planar portion of the sealing member 18 against the internal pressure in the storage portion 6.

For example, the folder 20 may be shaped by pouring a metal material into a mold (not illustrated), or may be shaped by subjecting a planar portion of a disk member to metal processing to shape the space portion 34 and the protrusions 24a, 24b, and 24c.

For example, as illustrated in B of Fig. 5, the folder 20 is subjected to processing of raising the protrusions 24a, 24b, and 24c to an arbitrary state during shaping or assembling of the power storage device 2. In the folder 20, for example, the connection portion between the support surface portion 22 and the protrusions 24a, 24b, and 24c may be formed to be wider than the protrusions 24a, 24b, and 24c in order to maintain the strength due to bending of the protrusions 24a, 24b, and 24c and to easily recognize the bending property and the bending position.

### <Configuration and manufacturing processing of power storage element 8>

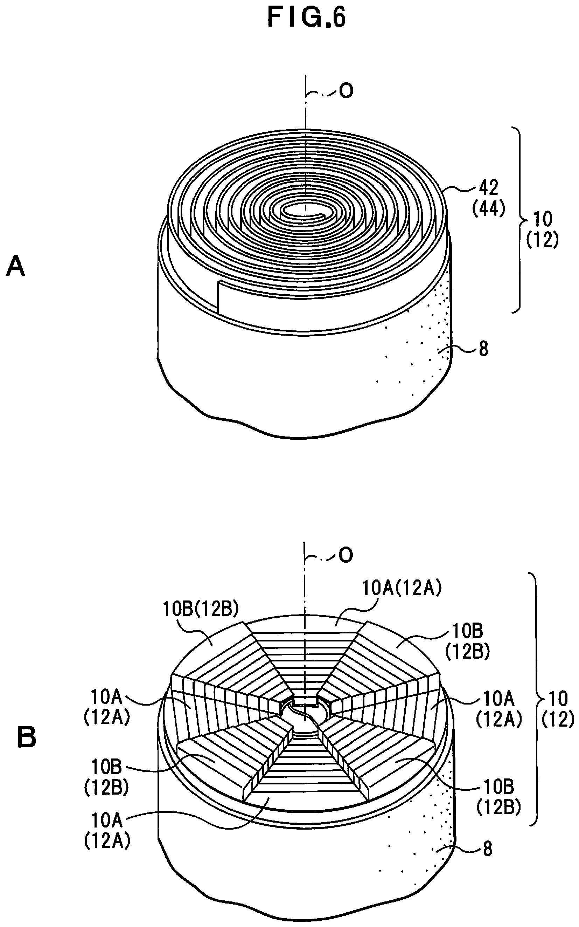

Fig. 6 illustrates a configuration example of a power storage element. The configuration of the power storage element and the manufacturing processing including the forming thereof are merely examples. The contents and procedures of the manufacturing processing described herein are merely examples, and the present invention is not limited to such a configuration.

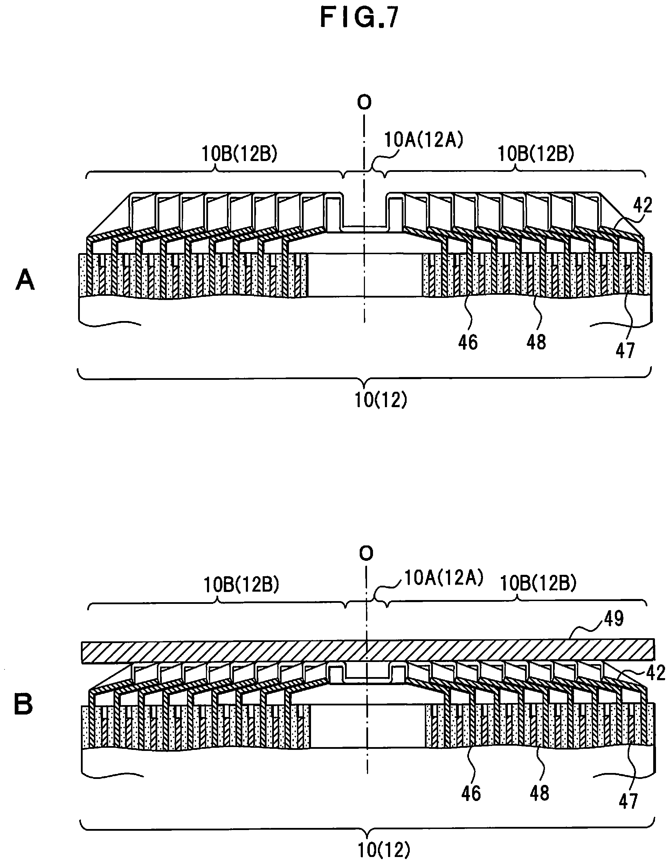

For example, as shown in A of Fig. 6, in the power storage element 8, an anode projecting portion 42 in which only an anode foil 46 (Fig. 7) projects is formed on one end surface of wound electrode foils, and a cathode projecting portion 44 in which only a cathode foil 47 (Fig. 7) projects is formed on the other end surface of the wound electrode foils, and the anode tab 10 or the cathode tab 12 is formed from one of these projecting portions. The power storage element 8 is a wound element obtained by, for example, forming a multilayer of the anode foil 46 and the cathode foil 47 with a separator 48 (Fig. 7) interposed therebetween, and by winding the multilayer in a predetermined direction to form a cylindrical shape.

For example, an aluminum foil is used as a base material for the anode foil 46 and the cathode foil 47, and a polarizable electrode containing an active material such as activated carbon, a binder, and the like is formed on both surfaces of the aluminum foil. In the power storage element 8, the anode foil 46 and the cathode foil 47 are wound together with the separator 48 in a layered state with reference to a winding center O. In addition, in the anode foil 46 and the cathode foil 47 before winding, for example, one long side portion protrudes along the winding direction, and this long side portion is layered by winding to form the anode projecting portion 42 or the cathode projecting portion 44.

In addition, for example, a holding tape (not shown) may be wound around the power storage element 8. Accordingly, in the power storage element 8, rewinding of the electrode foil can be prevented and insulation can be achieved against the inner wall surface of the exterior case 4.

For example, an end surface of the power storage element 8 is divided into a plurality of sections for the anode projecting portion 42 at predetermined angles with the winding center 0 as a reference with respect to the circumferential direction thereof. Then, for example, as illustrated in B of Fig. 6, in the anode projecting portion 42, a first partition portion 10A with the anode projecting portion 42 bent to a lower head and a second partition portion 10B with the anode projecting portion 42 bent so as to protrude higher than the first partition portion 10A from the wound end surface are formed by pressing a mold (not illustrated) toward the element end surface side for every other section.

Furthermore, in the power storage element 8, the first partition portion 12A and the second partition portion 12B may be formed on the cathode projecting portion 44 in the same manner as the anode projecting portion 42.

In the forming processing of the anode tab 10 and the cathode tab 12, for example, the anode projecting portion 42 or the cathode projecting portion 44 is bent to form respective partition portions 10A and 10B or respective partition portions 12A and 12B, and then the forming processing is performed so that the anode projecting portion 42 or the cathode projecting portion 44 has a height for which it is possible to be in close contact with current collecting plate 14 or the bottom of the storage portion 6. For example, as illustrated in A of Fig. 7, the anode tab 10 is in a state in which a first partition portion 10A and a second partition portion 10B creased with a mold or the like are restored and raised by an elastic force of the anode foil.

Similarly, in the cathode tab 12, a first partition portion 12A and the second partition portion 12B are raised.

In order to stabilize the formation state of the anode tab 10 and the cathode tab 12, for example, as shown in B of Fig. 7, in the power storage element 8, the anode tab 10 and the cathode tab 12 are formed by applying pressure from the tip side to the element end surface side by a pressing jig 49. By performing the forming treatment by applying pressure in this manner, the anode tab 10 and the cathode tab 12 can prevent rising of each of partition portions 10A, 10B, 12A, and 12B.

By preventing the anode tab 10 and the cathode tab 12 from rising, a welding area and a contact area with the current collecting plate 14 or the case bottom surface portion can be increased. Furthermore, when the current collecting plate 14 is displaced in the separation direction due to an increase in the pressure in the storage portion 6, the pressed anode tab 10 rises accordingly to a predetermined height and maintains the state. As a result, in the power storage device 2, breakage of the anode tab 10 can be prevented immediately when, for example, the pressure Fi starts to rise.

### <Connection processing between power storage element 8 and current collecting plate 14>

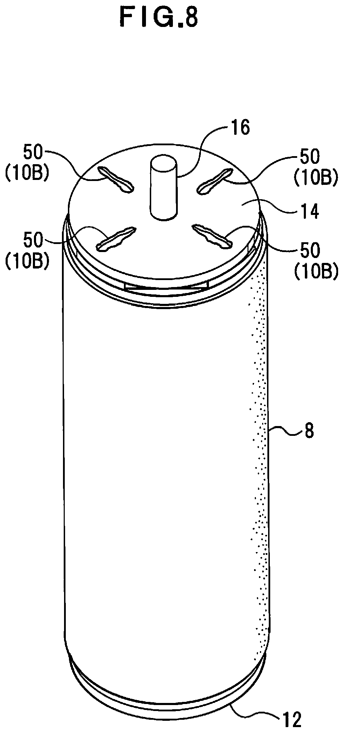

For example, as shown in Fig. 8, the connection surface of the current collecting plate 14 is mounted on the anode tab 10 side of the power storage element 8. Then, for the current collecting plate 14, welding processing is performed between the current collecting plate 14 and the anode tab 10 by, for example, performing laser irradiation from a surface opposite to the connection surface. In the welding processing, the position of the second partition portion 10B formed on the anode tab 10 is irradiated with a laser to form a welded portion 50.

For laser irradiation, an influence of laser heat or sputtering on the power storage element 8 may be avoided by using, for example, an inert gas such as an argon gas or a helium gas as a shielding gas to shield the power storage element 8. After the cathode tab 12 side of the power storage element 8 is stored in, for example, a storage portion 6 (not shown), the bottom of the exterior case 4 may be irradiated with a laser from the outside to perform welding processing.

### [Effects of First Embodiment]

With such a configuration, the following effects can be obtained.
(1) By covering the peripheral surface and the planar portions in the vertical direction of the sealing member 18 with the current collecting plate 14, the folder 20, and the exterior case 4, and holding the sealing member 18 by the pressing forces FxA and Fy applied by the swaging portion 30 and the vertical swaging portion 32 and the repulsive force FR, it is possible to suppress deformation and displacement of the sealing member 18 with respect to an increase of the pressure Fi in the storage portion 6.
(2) By suppressing deformation and displacement of the sealing member 18, the connection state between the power storage element 8 and the external terminal 16 can be stabilized.
(3) It is possible to suppress an increase in internal resistance of the power storage device 2 due to deformation and displacement of the sealing member 18 in the storage portion 6.
(4) By preventing deformation and displacement of the sealing member 18, it is possible to prevent a case internal pressure from acting on a part of the current collecting plate 14 and the folder 20 inside the exterior case 4.
(5) Even when an excessive pressure acts between a part of the folder 20 and the swaged opening end 36 due to the displacement of the sealing member 18, it is possible to prevent damage to one or both of the folder 20 and the exterior case 4.
(6) When a part of the folder 20 is used as an external terminal of the power storage device 2, it is possible to suppress an increase in connection resistance of the terminal due to the pressure Fi acting on the folder 20 by deformation or displacement of the sealing member 18.
(7) By forming the swaging portion 30 and the vertical swaging portion 32 while pressing the sealing member 18 from the opening portion side toward the inside of the storage portion 6, the sealing member 18 can be disposed at the set position in the storage portion 6, and the stability of the product can be enhanced in the processing of manufacturing the power storage device 2.
(8) In the power storage device 2 in which the swaging portion 30 and the vertical swaging portion 32 are formed, the repulsive force FR is always applied to the sealing member 18 from the inside of the storage portion 6 in the opening portion direction, whereby the holding state of the sealing member 18 between the current collecting plate 14 and the folder 20 is stabilized, and the sealing function can be enhanced.

### [Second Embodiment]

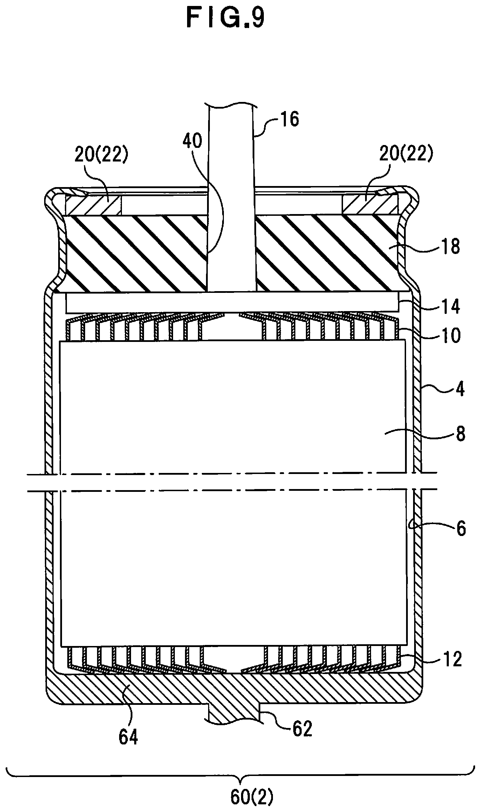

Fig. 9 illustrates an internal configuration example of a power storage device according to a second embodiment. The configuration illustrated in Fig. 9 is an example, and the present invention is not limited to such contents. In addition, in Fig. 9, portions identical to those in Fig. 1 are denoted by identical reference numerals.

For example, as illustrated in Fig. 9, the power storage device 60 includes an external terminal 16 of an anode side on an opening portion side of an exterior case 4 and an external terminal 62 of a cathode side on a bottom side. That is, the power storage device 60 includes a folder 20 having at least an annular support surface portion 22 without a protrusion 24 as compared with the first embodiment.

The external terminal 62 is an example of the second external terminal of the present disclosure, and may be integrally formed of the same material as the exterior case 4, or a separate member electrically connectable to a bottom 64 of the exterior case 4 may be installed.

In the power storage device 60, for example, when a power storage element 8 is inserted into a storage portion 6, a cathode tab 12 is brought into contact with the bottom 64 of the exterior case 4, and then welding processing is performed from the outside of the exterior case 4, whereby the cathode tab 12 and the external terminal 62 are electrically connected to each other.

In addition, on an anode tab 10 side of the power storage element 8, for example, a current collecting plate 14 and the anode tab 10 are welded and integrated before the power storage element 8 is stored in the storage portion 6, and the external terminal 16 is inserted into an insertion hole 40 and disposed to a position where the planar portion of a sealing member 18 is brought into contact with the current collecting plate 14 after the current collecting plate 14 and the anode tab 10 are welded and integrated. Furthermore, the folder 20 is placed on a planar portion of the sealing member 18. At this time, the folder 20 is disposed such that, for example, a winding center O of the power storage element 8 or the center of the external terminal 16 previously installed overlaps with the center axis of a support surface portion 22.

Note that a process after the installation of the sealing member 18 may be performed after the power storage element 8 is put into the storage portion 6.

In the power storage device 60, a swaging portion 30 is formed on the peripheral surface of the exterior case 4 depending on the arrangement position of the sealing member 18, and an opening end 36 of the exterior case 4 is bent toward the storage portion 6 side and pressed while being in contact with the support surface portion 22 to form a vertical swaging portion 32.

As a result, as described above, in the inside of the power storage device 60, the peripheral surface and the planar portions in the vertical direction of the sealing member 18 are covered by the current collecting plate 14, the folder 20, and the exterior case 4, and at the same time, the sealing member 18 is fixedly held by the pressing forces FxA and Fy from the swaging portion 30 and the vertical swaging portion 32, and the repulsive force FR from the power storage element 8, the anode tab 10, the cathode tab 12 or the like.

### [Effects of Second Embodiment]

With such a configuration, the following effects can be obtained.
(1) Effects similar to those of the first embodiment can be obtained.
(2) Since a sealing function of the sealing member 18 is enhanced against the internal pressure, and the external terminals having different polarities are provided from both ends, it is possible to provide the power storage device 60 adapted to the specifications of the substrate or the like to be mounted.
(3) By not using the peripheral surface of the exterior case 4 as a part of the external terminal or a conducting component to the external terminal, it is possible to reduce a possibility that a short circuit or the like occurs on contact of a conductor or the like with the exterior case 4 when electronic components are densely mounted or during driving of the power storage device 60.

### [Other Embodiments]

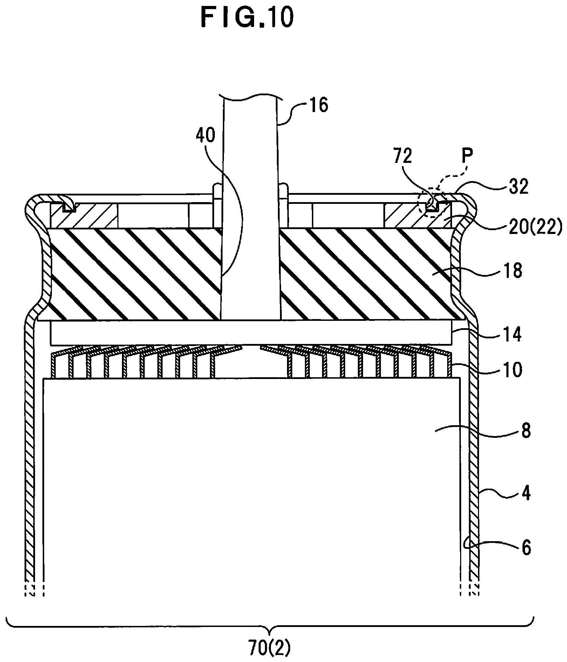

Modifications of the embodiments described above will be listed below.
(1) In the above embodiments, in the vertical swaging portion 32, the opening end 36 of the curled exterior case 4 is brought into contact with the plane of the support surface portion 22 of the folder 20 or bites into the plane of the support surface portion 22 by the pressing force Fy, but the present invention is not limited thereto. For example, as shown in Fig. 10, a power storage device 70 may include a groove portion 72 for engaging the opening end 36 with a part of the plane of the support surface portion 22. The groove portion 72 may be formed in a manufacturing process of the folder 20, or may be formed depending on a contact position with the opening end 36 when the vertical swaging portion 32 is formed in the exterior case 4. The groove portion 72 may be formed on, for example, the entire circumference of the annular support surface portion 22, or may be formed with a predetermined length at predetermined intervals. In this case, for example, engaging portions protruding at positions corresponding to the groove portions 72 formed at predetermined intervals may be formed in the opening end 36 of the exterior case 4.
   With the groove portion 72, in the power storage device 70, the connectivity between the folder 20 and the opening end 36 in the vertical swaging processing can be improved. In addition, by engaging the opening end 36 with the groove portion 72, it is possible to suppress dispersion of the pressing force Fy due to vertical swaging in the horizontal direction of the support surface portion 22 due to an influence of an elastic force of the exterior case 4 or the like, and it is possible to efficiently apply the pressing force Fy to the sealing member 18.
(2) In the above embodiment, for example, as illustrated in A of Fig. 5, a case where the protrusions 24a, 24b, and 24c are formed in a shape protruding to the central axis of the disk surface has been described, but the present invention is not limited thereto. For example, the protrusions 24a, 24b, and 24c may be formed so as to protrude obliquely with respect to the central axis on the disk surface constituting the folder 20, and may be configured to rise in the vertical direction from the connection portion with the support surface portion 22. According to such a forming process, by changing formation angles of the protrusions 24a, 24b, and 24c with respect to the central axis without changing the outer diameter of the disk surface constituting the folder 20, it is possible to adjust the protrusion length.
(3) In the above embodiments, in the vertical swaging portion 32 formed on the opening portion side of the exterior case 4, a part of the exterior case 4 is curled, so that a predetermined gap is generated on the outer peripheral side of the folder 20 disposed in the storage portion 6. In this modification, for example, a part of the sealing member 18 deformed by the pressing force Fy due to vertical swaging or by the pressing force FxA due to swaging of the swaging portion 30 may enter such a gap. That is, in the power storage device according to this modification, the gap generated between the folder 20 and the vertical swaging portion 32 is configured to be sealed by a part of the sealing member 18.
   Furthermore, in the processing of manufacturing the power storage device, in order to deform the sealing member 18 to allow a part thereof to enter into such a gap, a pressing force or a pressing direction may be adjusted in the forming processing of the swaging portion 30 and the vertical swaging portion 32.
   According to such a configuration, it is possible to improve sealing performance of the exterior case 4 by the sealing member 18.
(4) In the above embodiments, as the support plate which supports the sealing member 18, a case where one surface of the current collecting plate 14 which is opposite to the surface which is brought into contact with the power storage element 8 is brought into contact with one surface of the sealing member 18 on the bottom surface side has been described, but the present invention is not limited thereto. For example, a support plate which is a separate component from the current collecting plate 14 and supports the bottom surface side of the sealing member 18 may be provided for the storage portion 6 of the power storage device 2. That is, for example, the power storage element 8, the anode tab 10, the current collecting plate 14, the support plate, the sealing member 18, and the folder 20 are disposed in the storage portion 6 toward the opening portion side, and the sealing member 18 is held between at least the support plate and the folder 20.

In addition, for example, the support plate may be disposed such that a surface not in contact with the sealing member 18 is in contact with a surface of the current collecting plate 14 on the opening portion side, or may be disposed such that a space portion is provided between the support plate and current collecting plate 14. The arrangement distance between the support plate and the current collecting plate 14 may be set based on, for example, at least a simulation result or the like on the assumption of deformation or displacement of the sealing member 18 with respect to the internal pressure increased by the operation of the power storage device 2.

In the manufacturing processing of the power storage device 2, for example, the support plate may be installed on the plane of the current collecting plate 14 after the current collecting plate 14 is connected to the power storage element 8, or the sealing member 18 and the support plate integrated into the sealing member 18 in advance may be stored in the storage portion 6. In addition, even in a case of using the support plate, the same processing as in the manufacturing method described above may be performed.

As described above, the most preferred embodiments and the like of the technology of the present disclosure have been described. The technology of the present disclosure is not limited to the above description. Various modifications and changes can be made by those skilled in the art based on the gist described in the claims or disclosed in Mode(s) for Carrying out the Invention. It goes without saying that such modifications and changes are included in the scope of the technology of the present disclosure.

### Industrial Applicability

The power storage device and the method for manufacturing the power storage device of the present disclosure are useful because the peripheral surface and the planar portions in the vertical direction of the sealing member are covered by the current collecting plate, the folder, and the exterior case, and the sealing member is fixed and held by the pressing force due to the swaging in the peripheral surface direction or the vertical swaging to the inside of the storage portion, so that the deformation or the displacement of the sealing member can be suppressed against the increase in the pressure in the storage portion, and the sealing performance of the storage portion is improved.

### Reference Signs List

- 2, 60, 70: Power storage device

- 4: Exterior case
- 6: Storage portion
- 8: Power storage element
- 10: Anode tab
- 10A, 12A: First partition portion
- 10B, 12B: Second partition portion
- 12: Cathode tab
- 14: Current collecting plate
- 16, 62: External terminal
- 18: Sealing member
- 20: Folder
- 22: Support surface portion
- 24, 24a, 24b, 24c: Protrusion
- 30: Swaging portion
- 32: Vertical swaging portion
- 34: Space portion
- 36: Opening end
- 40: Insertion hole
- 42: Anode projecting portion
- 44: Cathode projecting portion
- 46: Anode foil
- 47: Cathode foil
- 48: Separator
- 49: Pressing jig
- 50: Welded portion
- 64: Bottom
- 72: Groove portion

## Claims

1. A power storage device comprising:
a case including a storage portion;
a power storage element in which an electrode tab is formed on a wound end surface and which is stored in the storage portion;
a sealing member which is disposed in the storage portion and whose peripheral surface is crimped to an inner wall surface of the case by swaging from an outer peripheral side of the case to seal an opening portion of the storage portion;
a support plate which is in contact with and supports a surface of the sealing member, the surface facing a bottom side of the storage portion; and
a support member which is disposed on a surface of plane surfaces of the sealing member, the surface of the plane surfaces facing an opening portion side of the storage portion, and presses and supports the sealing member by engagement with an opening end of the case swaged toward the bottom side of the storage portion.

2. The power storage device according to claim 1, wherein in the sealing member, at least a part of an outer edge side of the surface on the bottom side and the surface on the opening portion side of the case is held between the support plate and the support member.

3. The power storage device according to claim 1 or 2, wherein
the support plate is a current collecting plate having one surface in contact with the electrode tab, and another surface in contact with the sealing member, a part of the current collecting plate being provided with a first external terminal, and
the first external terminal protruding from the current collecting plate toward the opening portion side penetrates a through hole formed in a part of a sealing surface of the sealing member, and the sealing member holds the current collecting plate through the first external terminal by receiving stress due to swaging from the outer peripheral side of the case.

4. The power storage device according to any one of claims 1 to 3, wherein the support member includes a second external terminal which is electrically connected to the power storage element through the case in contact with the electrode tab of an anode or a cathode disposed on the bottom side of the storage portion.

5. The power storage device according to any one of claims 1 to 4, wherein
a plurality of electrode tabs including the electrode tab includes an anode tab formed on one wound end surface of the power storage element and a cathode tab formed on another wound end surface of the power storage element, and
one of the anode tab and the cathode tab is welded to the support plate, and the other is fixedly connected to a bottom of the storage portion by welding.

6. A method for manufacturing a power storage device, the method comprising:
bringing one surface of a current collecting plate into contact with an electrode tab formed on a wound end surface of a power storage element to electrically connect a first external terminal integrated with the current collecting plate to the power storage element, and bringing another surface of the current collecting plate into contact with one surface of a sealing member disposed in a storage portion of a case in which the power storage element is stored;
disposing a support member on a surface of plane surfaces of the sealing member, the surface of the plane surfaces facing an opening portion side of the storage portion;
crimping a peripheral surface of the sealing member and an inner wall surface of the case by swaging from an outer peripheral side of the case to seal the opening portion; and
swaging an opening end of the case toward the current collecting plate, and pressing and supporting the sealing member by engagement with the opening end.

7. The method for manufacturing a power storage device according to claim 6, the method further comprising
pressing the sealing member stored in the storage portion with a predetermined force to dispose the sealing member at a setting position of the storage portion, wherein
the swaging processing from the outer peripheral side of the case and the swaging processing for the opening end are performed with the sealing member pressed.

8. The method for manufacturing a power storage device according to claim 7, the method comprising
electrically connecting the power storage element and a second external terminal formed on the support member through the case and the electrode tab of an anode or a cathode disposed on a bottom side of the storage portion.
